# EUROPEAN PATENT SPECIFICATION

(11) **EP 4 282 216 B1**
(45) Date of publication and mention of the grant of the patent: **29.10.2025**
(21) Application number: 21920170.4
(22) Date of filing: 19.01.2021
(51) Int. Cl.: H04W 74/0808

(54) **CHANNEL ACCESS PROCEDURES**
KANALZUGRIFFSVERFAHREN
PROCÉDURES D'ACCÈS À UN CANAL

(43) Date of publication of application: 29.11.2023
(73) Proprietor: ZTE Corporation, Shenzhen, Guangdong 518057 (CN)
(72) Inventor: YANG, Ling, Shenzhen, Guangdong 518057 (CN); TIAN, Li, Shenzhen, Guangdong 518057 (CN)
(74) Representative: Vossius & Partner Patentanwälte Rechtsanwälte mbB
(86) International application number: PCT/CN2021/072611
(87) International publication number: WO 2022/155765

(56) References cited:
- WO-A1-2019/160741
- CN-A- 110 446 252
- US-A1- 2019 200 389
- US-A1- 2019 200 389
- US-A1- 2020 413 449
- LENOVO ET AL: "Channel access mechanisms for NR from 52.6 GHz to 71GHz", vol. RAN WG1, no. e-meeting; 20210125 - 20210205, 18 January 2021 (2021-01-18), XP051970234, Retrieved from the Internet <URL:https://ftp.3gpp.org/tsg_ran/WG1_RL1/TSGR1_104-e/Docs/R1-2100062.zip R1-2100062_Channel_Access_Lenovo_MotoM_vfinal.docx> [retrieved on 20210118]
- QUALCOMM INCORPORATED: "Channel Access Mechanisms for NR in 52.6 to 71GHz band", 3GPP DRAFT; R1-2101458, vol. RAN WG1, 19 January 2021 (2021-01-19), pages 1 - 8, XP051971623
- SAMSUNG: "Channel access mechanism for NR from 52.6 GHz to 71 GHz", 3GPP DRAFT; R1-2101199, vol. RAN WG1, 19 January 2021 (2021-01-19), pages 1 - 9, XP051971413

## Description

### TECHNICAL FIELD

This disclosure is directed generally to digital wireless communications.

### BACKGROUND

Mobile telecommunication technologies are moving the world toward an increasingly connected and networked society. In comparison with the existing wireless networks, next generation systems and wireless communication techniques will need to support a much wider range of use-case characteristics and provide a more complex and sophisticated range of access requirements and flexibilities.

Long-Term Evolution (LTE) is a standard for wireless communication for mobile devices and data terminals developed by 3rd Generation Partnership Project (3GPP). LTE Advanced (LTE-A) is a wireless communication standard that enhances the LTE standard. The 5th generation of wireless system, known as 5G, advances the LTE and LTE-A wireless standards and is committed to supporting higher data-rates, large number of connections, ultra-low latency, high reliability and other emerging business needs.

3GPP, R1-2100062 relates to channel access mechanisms for NR from 52.6 GHz to 71 GHz.

US 2019/200389 A1 relates to methods and devices for transmitting and receiving signals.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional.

Techniques are disclosed for performing channel access procedures. An example wireless communication method, comprises determining, by a wireless device, whether a received beam or a transmission beam is to be used as a sensing beam for a directional listen-before-talk (LBT) operation; and performing the directional LBT operation according to the determining.

In some embodiments, the sensing beam is determined to be either the received beam or the transmission beam, and wherein the method further comprises: determining that a clear channel assessment (CCA) detection threshold is used for a narrow sensing beam with a narrow transmission beam in response to the received beam being fully or partially overlapping with the transmission beam; or determining that the CCA detection threshold is used for the sensing beam with a plurality of transmission beams in response to the received beam being fully or partially overlapping with the plurality of transmission beams. In some embodiments, the sensing beam is determined to be either the received beam or the transmission beam, and wherein the method further comprises: determining that a clear channel assessment (CCA) detection threshold is used in response to: the received beam being wider or narrower than the transmission beam, the received beam being fully or partially overlapping with the transmission beam, the received beam being wider or narrower than a plurality of transmission beams, or the received beam being fully or partially overlapping with a plurality of transmission beams.

In some embodiments, the CCA detection threshold is determined based on: a beamforming gain, a width of the transmission beam, a coexistence scenario, a width of the sensing beam, or an additional factor that is used for reflecting a difference between an LBT beam and one or more transmission beams.

Another example wireless communication method comprises determining, by a wireless device, either a clear channel assessment (CCA) detection threshold for a plurality of beams for a multi-beam listen-before-talk (LBT) operation, or a LBT mode or a LBT type for channel access, and performing the multi-beam LBT operation or a corresponding LBT operation for the LBT mode or the LBT type according to the determining.

In some embodiments, the CCA detection threshold for one beam from the plurality of beams is determined to be the same as that for another beam from the plurality of beams in response to: a width of each transmission beam or of a sensing beam being same, or a received beam being fully or partially overlapping with a transmission beam. In some embodiments, the CCA detection threshold for one beam from the plurality of beams is determined to be different as that for another beam from the plurality of beams in response to: a width of each transmission beam or of a sensing beam being same, or a received beam being wider or narrower than a transmission beam, or the received beam being fully or partially overlapping with the transmission beam, and wherein a sensing beam include the transmission beam or the received beam. In some embodiments, a same LBT type is used for each beam from the plurality of beams.

In some embodiments, the LBT type includes a Cat4 LBT, Cat3 LBT, one-shot LBT or a Cat2 LBT, multiple one-shot LBT, or No LBT. In some embodiments, in response to the LBT type being a Cat4 LBT or a Cat3 LBT: a same random back-off counter or a same contention window size or a same channel access priority class or a same maximum channel occupancy time is used for each beam from the plurality of beams, a random back-off counter or a contention window size or a channel access priority class or a maximum channel occupancy time is determined independently for each beam from the plurality of beams, a start of transmission is configured to be same or different for each beam from the plurality of beams, or performing a self-deferral with which a transmission for one or more beams is aligned or wait LBT is completed in one or more other beams from the plurality of beams.

In some embodiments, in response to the LBT type being a Cat4 LBT or a Cat3 LBT and in response to the wireless device completing the corresponding LBT operation in advance on one or more beams of the plurality of beams: stopping CCA detection and performing a sensing operation for a period immediately before a start of a transmission on the one or more beams, or continue to perform the sensing operation within the period before the start of the transmission on the one or more beams. In some embodiments, in response to the LBT type being a Cat4 LBT or a Cat3 LBT and in response to the wireless device is about to complete the corresponding LBT operation on one or more beams of the plurality of beams: stopping CCA detection and start to perform the corresponding LBT operation until a same random back-off value is reached in one or more other beams, or performing additional CCA detection and start to perform the corresponding LBT operation that is unfinished until the same random back-off value is reached in the one or more other beams, or continuing to perform the corresponding LBT operation that is uncompleted, wherein after the corresponding LBT operation is finished on the one or more beams, and when the corresponding LBT operation is still being performed on the one or more other beams, then stop any operation until a transmission start, or continue to perform additional CCA detection until the corresponding LBT operation is completed on the one or more other beams or until the transmission start.

In some embodiments, in response to the LBT type being a Cat4 LBT or a Cat3 LBT and in response to the wireless device performs LBT failure or does not complete the corresponding LBT operation on one or more beams of the plurality of beams: keeping a random back-off value or a contention window size or a channel access priority class or LBT type or LBT mode used for a next transmission corresponding to the one or more beams, resetting the random back-off value or the contention window size or the channel access priority class or the LBT type or the LBT mode for a next transmission corresponding to the one or more beams, or configuring the random back-off value or the contention window size or the channel access priority class to be smaller or more simplified LBT type or LBT mode to improve probability of accessing channel than that of a previous beam for a next transmission corresponding to the one or more beams.

In some embodiments, in response to the LBT type being a one-shot LBT: a start time of a CCA detection or a channel access priority class or a maximum channel occupancy time for each beam of the plurality of beams is same, the start time of the CCA detection or the channel access priority class or the maximum channel occupancy time for each beam of the plurality of beams is different, the start time of the CCA detection for each beam of the plurality of beams is fixed, the start time of the CCA detection for each beam of the plurality of beams is random, a same sensing duration for one-shot LBT is used for each beam of the plurality of beams, a start of transmission is configured as same or different for each beam from the plurality of beams, or transmitting in a transmission beam an indication that the one-shot LBT is successfully performed in one or more beams of the plurality of beams. In some embodiments, in response to the LBT type being a one-shot LBT and in response to the wireless device performing a LBT failure on one or more beams of the plurality of beams: performing additional one-shot LBT or multiple one-shot LBT operation before transmission, or switching from one-shot LBT to multiple one-shot LBT before the transmission. In some embodiments, the LBT mode or the LBT type or a number of the multiple one-shot LBT is: pre-defined, signaled in a downlink control information (DCI), signaled in a radio resource control (RRC), or signaled in a medium access control-control element (MAC CE). In some embodiments, the LBT type used for one or more beams or a beam group from the plurality of beams is different than that used for another one or more beams or beam group from the plurality of beams.

In some embodiments, on which of the one or more beams or beam group that the corresponding LBT operation is performed, or what LBT type to use for the plurality of beams is determined/indicated by: a channel condition or state, an intensity of interference, an indication of a downlink control information (DCI), an indication in a radio resource control (RRC), a medium access control-control element (MAC CE), a result of interference measurement on beam, an indication of received receiver assistance information on beam, a situation of performing LBT on beam in the previous or latest M times transmission, a pre-defined condition, a default, a reception or decoded situation for the previous transmission, HARQ-ACK feedback indication, configured grant downlink feedback information(CG-DFI), or configured grant uplink control information(CG-UCI).

In some embodiments, in response to the LBT type being a Cat4 LBT or a Cat3 LBT or multiple one-shot LBT on one or more beams: a same random back-off counter or a same contention window size or a same channel access priority class or a same maximum channel occupancy time or a same number of one-shot LBT is used for one or more beams, a random back-off counter or a contention window size or a channel access priority class or a maximum channel occupancy time or a number of one-shot LBT is determined independently for the one or more beams, a start of transmission is configured as the same or different for one or more beams, performing a self-deferral with which a transmission for one or more beams is aligned or wait LBT is completed in one or more other beams from the plurality of beams, or a same sensing duration for one-shot LBT is used for one or more beams. In some embodiments, in response to the LBT type being a Cat4 LBT or a Cat3 LBT or multiple one-shot LBT on one or more beams, and in response to the wireless device completing the corresponding LBT operation in advance on one or more beams: stopping a CCA detection and only performing a sensing with a period immediately before the start of transmission on one or more beams or for one or more beams on which random back-off value decreased to 0 with Cat4 LBT or a Cat3 LBT or a last one-shot LBT to be performed, or continuing to perform the CCA detection with the period before the start of the transmission on one or more beams or when Cat4 LBT or a Cat3 LBT or multiple one-shot LBT is still performed on one or more other beams, or performing a wait operation for the one or more other beams that are performing LBT procedure until the starting of the transmission, or performing the CCA detection with period on each beam simultaneously before the transmission.

In some embodiments, in response to the LBT type being a Cat4 LBT or a Cat3 LBT or multiple one-shot LBT on one or more beams, and in response to the wireless device is about to complete the corresponding LBT operation on one or more beams: stopping a CCA detection and starting to perform the corresponding LBT operation until a same random back-off value is reached or times of performed multiple one-shot LBT is reached a special value or one-shot LBT will be performed in one or more other beams, performing an additional CCA detection and starting to perform the corresponding LBT operation that is unfinished until the same random back-off value is reached in one or more other beams, or the times of performed multiple one-shot LBT is reached the special value, or one-shot LBT will be performed is reached in one or more other beams, or continuing to perform the corresponding LBT operation on one or more beams, wherein after the corresponding LBT operation is finished on one or more beams, and when the corresponding LBT operation is still being performed on the one or more other beams, then perform a stop operation until transmission start, or continue to perform additional CCA detection until the corresponding LBT operation is completed on the one or more other beams or transmission start.

In some embodiments, a condition of stopping a current Cat4LBT or a Cat3 LBT or the multiple one-shot LBT operation includes: determining that a consecutive S times detection of a channel corresponding to a beam is idle, or determining that a random back-off counter N or a remaining times of performing the multiple one-shot LBT operation is smaller than a threshold value, wherein S and N are integers. In some embodiments, in response to the LBT type being a Cat4 LBT or a Cat3 LBT or multiple one-shot LBT on one or more beams, and for one or more beams that LBT is not completed or performed failure before transmission start, include: keeping a random back-off value or a contention window size or a channel access priority class or times of configured multiple one-shot LBT, or LBT type or LBT mode used for a next transmission corresponding to one or more beams, or resetting the random back-off value or the contention window size or the channel access priority class or the times of configured multiple one-shot LBT, or LBT type or LBT mode for a next transmission corresponding to one or more beams, or configuring the random back-off value or the contention window size or the channel access priority class or times of configured multiple one-shot LBT to be smaller or more simplified LBT type or LBT mode that is beneficial to improve probability of accessing channel than that of a previous beam for a next transmission corresponding to the one or more beams. In some embodiments, in response to for the one or more beams that is not configured to perform Cat4 LBT or a Cat3 LBT or multiple one-shot LBT, the wireless device performs one-shot LBT or multiple one-shot LBT or No LBT or a CCA detection with period immediately before transmission.

Another example wireless communication method comprises determining, by a wireless device, one or more beams or a listen-before-talk (LBT) type to use for performing a LBT operation; and performing the LBT operation according to the determining.

In some embodiments, the one or more beams that the LBT operation is used for a plurality of beams or the LBT type are determined based on: a downlink control information (DCI) signaling, a medium access control-control element (MAC CE) signaling, a radio resource control (RRC) signaling, a result of an interference measurement or a reporting on a beam, an indication of received receiver assistance information on the beam, a situation for performing the LBT operation on a beam in a previous or latest M times transmission or a time period or timer, a reception or decoded situation for the previous transmission, HARQ-ACK feedback indication, configured grant downlink feedback information (CG-DFI), or configured grant uplink control information (CG-UCI).

In some embodiments, at least one of the one or more beams for a plurality of beams is used for a same LBT type or different LBT type. In some embodiments, for at least one of the one or more beams for a plurality of beams that is not indicated using LBT, No LBT operation is applied. In some embodiments, the LBT operation configured in the one or more beams or No LBT operation used in one or more beams is changed or kept on beam for a next transmission or time period or timer or a subsequent transmission or time period or timer based on: a channel condition or state, DCI signaling, RRC signaling, MAC CE signaling, pre-defined or default, a reception or decoded situation for the previous transmission, HARQ-ACK feedback indication, configured grant downlink feedback information (CG-DFI), or configured grant uplink control information (CG-UCI). In some embodiments, the LBT type includes a Cat4 LBT, Cat3 LBT, one-shot LBT or a Cat2 LBT, multiple one-shot LBT, or No LBT.

Another example wireless communication method comprises performing, by a wireless device, a directional listen-before-talk (LBT) operation with one LBT beam that covers partial or all of a plurality of transmission beams to be transmitted by the wireless device; determining that the directional LBT operation using the one LBT beam is successful; and transmitting one transmission beam or the plurality of transmission beams in response to the determining that the directional LBT operation is successful.

Another example wireless communication method comprises adjusting, by a wireless device, a contention window size for a directional listen-before-talk (LBT) operation; and performing, the directional LBT operation according to the adjusting the contention window size.

In some embodiments, the contention window size is adjusted based on a ratio or a number of received hybrid automatic repeat request acknowledgement (HARQ ACK) message or whether information received or decoded successfully for a beam level or for each beam index. In some embodiments, the reference duration used for contention window size adjustment is defined based on a beam level or based on each beam index. In some embodiments, feedback results of all beams in the reference duration is used for the adjusting the contention window size of a next transmission in response to the directional LBT operation being a wide directional LBT operation or an omni-directional LBT operation.

In yet another exemplary aspect, the above-described methods are embodied in the form of processor-executable code and stored in a non-transitory computer-readable storage medium. The code included in the computer readable storage medium when executed by a processor, causes the processor to implement the methods described in this patent document.

In yet another exemplary embodiment, a device that is configured or operable to perform the above-described methods is disclosed.

The above and other aspects and their implementations are described in greater detail in the drawings, the descriptions, and the claims.

### BRIEF DESCRIPTION OF THE DRAWING

FIG. 1 shows an example scenario where a received beam received by a wireless device covers or partially covers a transmission beam of the wireless device.
FIGS. 2 to 6 show example flowcharts for performing channel access.
FIG. 7 shows an exemplary block diagram of a hardware platform that may be a part of a network node or a user equipment.

### DETAILED DESCRIPTION

With the emergence of fifth-generation (5G) new radio (NR) networks will come an explosion of new user data applications that will be supported by the NR networks. With this rapid growth of user data, the demand for spectrum will increase dramatically. In order to alleviate for the requirement of spectrum, Equipment manufacturers and operators all over the world focus on the resource rich and free unlicensed spectrum, and carry out a series of related technology research and product development. Further, Research and development to support NR from 52.6 GHz to 71 GHz is currently underway. In high frequency, transmission with fine beamforming may include using massive antenna elements to combat high propagation loss. For this case, this patent application describes related contents of directional listen before-talk (LBT) corresponding to directional transmission beam, such as how to define sensing beam; the impact of clear channel assessment (CCA) threshold if directional LBT is support, and/or, mismatch between sensing beam and transmission beam; how to define LBT rule for transmission with different beams in time division multiplexing (TDM) or space division multiplexing (SDM); introduction of LBT operation in specific beam(s) to degrade LBT overhead; Handling of LBT failure; adjustment of contention windows (CWs) if directional LBT is supported

For the above-mentioned technical issues, there are no any standardized regulations and effective solutions in current stage. Therefore, this patent application describes techniques that can solve or alleviate at least the above-mentioned technical issues.

The example headings for the various sections below are used to facilitate the understanding of the disclosed subject matter and do not limit the scope of the claimed subject matter in any way. Accordingly, one or more features of one example section or embodiment can be combined with one or more features of another example section or embodiment. Furthermore, 5G terminology is used for the sake of clarity of explanation, but the techniques disclosed in the present document are not limited to 5G technology only, and may be used in wireless systems that implemented other protocols.

The device mentioned in the following embodiments can be any one or more of the following: User Equipment (UE), and Base Station (BS).

LBT type mentioned in the following embodiments can be any one or more of the following: type1 channel access procedure (or it can also be called Cat 4 LBT with random back-off with a contention window of non-fixed size); Cat3 LBT with random back-off with a contention window of fixed size; new channel access procedure obtained based on Cat4/3 LBT; one-shot LBT (or it can also be called Cat2 LBT with the length of a special duration); multiple one-shot LBT. Herein, a special duration can be 1, 2, 3, 4, 5, 6, 7, 8, 9, 10, or any combination of the above-mentioned value. The units can be microseconds (us), or milliseconds (ms), or nanosecond(ns); No LBT. Optionally, for the above mentioned Cat3 LBT/Cat4 LBT, channel access priority class (CAPC) can be supported and different CAPC is corresponded to different (maximum) channel occupancy time. Note, partial or all the parameter(s) and/or the setting (e.g., the length of duration, sensing granularity, sensing duration, and so on) of parameter(s) and/or procedure and/or steps corresponding to Cat3 LBT/Cat4 LBT can be different with the current disclosed specification. Parameter can include at least one of : defer period duration, random back-off value N, minimum contention window, maximum contention window, sensing duration, channel access priority class, (maximum) channel occupancy time. Optionally, defer period duration or sensing duration can be 1, 2, 3, 4, 5, 6, 7, 8, 9, 10, or any combination of the above-mentioned value. The units can be microseconds (us), or milliseconds (ms), or nanosecond(ns).

LBT mode mentioned in the following embodiments can be any one or more of the following: directional LBT, omni-directional LBT, multiple beams based LBT, LBT for one or more beams in the beam set with sensing (e.g., LBT performed on specific beam(s)).

### EMBODIMENT 1

This embodiment provides a channel access method such as LBT or CCA, or other mechanism used for assessment channel state for the case of the transmission(s) with different beams.

For the case of transmission(s) with different beams, a device can perform directional LBT or omni-directional LBT with one LBT beam that covers partial or all transmission beams before transmission.

If the device performs LBT successful, then allow to transmit transmission in different beams simultaneous.

If the device performs or determines LBT failure in one LBT beam (or, the device determines a failure to access the channel in one LBT beam, or, the device determines that detected energy in one LBT beam is larger than a first threshold value), then at least one of (or any one or more of) the following options can be used. The term LBT failure can indicate that the outcome of the LBT operation performed on a beam was not successful:
Option-1: the device will not transmit transmission in the current transmission opportunity, and attempts to access channel or perform LBT or transmit transmission at the next transmission opportunity. The LBT method (for example, LBT type and/or LBT mode) for the next transmission opportunity can be determined by at least one of: pre-defined method, DCI signaling, MAC CE signaling, RRC signaling, the same LBT method as that of the previous transmission, the same LBT type (mode )and/or different LBT mode(type) compared to that of the previous transmission, the same LBT type with different channel access priority class compared to that of the previous transmission.
Option-2: If the detected energy in one LBT beam is larger than a first threshold value, and lower than or equal to a second threshold value, then the device determines that the current channel corresponding to one LBT beam as idle, or the device thinks the current channel corresponding to one LBT is available and can transmit transmission. Wherein, the first threshold value is lower than the second threshold value in dBm.
Option-3: multiple LBT with on LBT beam can be performed, or LBT with one LBT performed multiple times. For example, if the device performs LBT failure in one LBT beam, then it can try to perform the next one LBT beam until detection channel idle or the last time LBT with one LBT beam before transmission. If one of multiple times LBT with one LBT beam is performed successful, then the device can transmit transmission. Otherwise, if none of multiple times LBT with one beam LBT is performed successful, then the device cannot transmit transmission, or gives up the current transmission.
Option-4: if the device performs LBT failure in one LBT beam, then the device can switch LBT method. For example, switch to more simplified LBT type, or No LBT and/or multiple beams based LBT. Herein, more simplified LBT type relative to the previous LBT method (e.g., LBT type and/or LBT mode) can be at least one of: type 1 channel access procedure (or Cat4 LBT) with higher channel access priority class/smaller channel access parameters; random back-off with fixed contention window (e.g., Cat3 LBT), simplified random back-off channel access procedure, one-shot LBT(e.g., Cat2 LBT with a special duration), multiple one-shot LBT. Wherein, a special duration can be 1, 2, 3, 4, 5, 6, 7, 8, 9, 10, or any combination of the above-mentioned value. The units can be microseconds (us), or milliseconds (ms) or nanosecond(ns); Optionally, after from LBT with one LBT beam switch to multiple beam LBT, the device needs to perform LBT in multiple beams. If at least one of multiple beams is detected as the channel to be idle, then the device can transmit transmission in beam(s) where LBT is performed successful, or more methods can refer to later embodiment.

Optionally, for the case of transmission(s) with different beams, a device can perform LBT in one LBT beam that covers partial or all transmission beams with multiple times before transmission. For example, if the device performs LBT failure in one LBT beam, then it can try to perform the next LBT with one LBT beam until detection channel idle or the last LBT with one LBT beam before transmission. If one of multiple one beam LBT is performed successful, then the device can transmit transmission. Otherwise, if none of multiple one beam LBT is performed successful, then the device cannot transmit transmission, or gives up the current transmission.

If the device performs or determines LBT failure in one or more LBT beam, then optionally, random back-off value or contention window size or channel access priority class or LBT type and/or LBT mode is kept or used for the next transmission corresponding to one or more beams; or random back-off value or contention window size or channel access priority class or LBT type and/or LBT mode is reset or configured as smaller (or simpler LBT type, or LBT mode for more channel access chance) than that of the previous transmission .

In some embodiments, one LBT beam can be one beam LBT. For example, one LBT beam is one beam LBT. In some embodiments, the above-mentioned methods can be used for the current transmission or next transmission, or subsequent transmission(s).

Any one or more of the above methods can be applicable for a case that one LBT with one LBT beam that covers one transmission beam.

Any one or more of the above methods on LBT (e.g., determine LBT success or failure, and/or handling LBT failure, or other, and so on) can be used independently, or in some certain cases/scenarios.

In this application, related method on LBT mentioned in the following embodiments can be used or complemented with each other.

### EMBODIMENT 2

For the case of transmission(s) with different beams, a device can perform channel access procedure in multiple LBT beams that covers multiple transmission beams before transmission.

Preferably, for the case of the device transmits transmission with multiple different beams, when the first/previous multiple beams based LBT just covers some/partial transmission beams, then the device may perform additional multiple beam LBT prior to the last transmission. Or, whether to need to perform additional multiple beams based LBT based on at least one of: DCI signaling indication, or MAC CE signaling, or RRC signaling, or, other trigger event, or after transmission in LBT successful beam(s), or pre-defined method, or occasion(s) that LBT is not performed/ failure for the current transmission and/or the subsequent transmission(s).

Preferably, for multiple LBT beams case, at least one of the following LBT methods can be considered:

### Method-1:

The device can perform channel access (or LBT or CCA) on each beam, where B is a set of beams on which the device intends to transmit, i=0,1,2,...,X-1, and X is the number of beams on which the device intends to transmit.

A special LBT type is used for each beam. wherein, the special LBT type can be at least one of : type1 channel access procedure (or it can also be called Cat 4 LBT with random back-off with a contention window of non-fixed size); Cat3 LBT with random back-off with a contention window of fixed size; new channel access procedure obtained based on Cat4/3 LBT; one-shot LBT (or it can also be called Cat2 LBT with the length of a special duration); multiple one-shot LBT. Herein, a special duration can be 1, 2, 3, 4, 5, 6, 7, 8, 9, 10, or any combination of the above-mentioned value. The units can be microseconds (us), or milliseconds (ms), or nanosecond(ns). Preferably, for each beam in a set of beams, the same LBT type is applied. Optionally, the configured parameter in the same LBT type can be same or different for each beam.

For example, if Cat4/3 LBT is used for each beams, then at least one of the following can be considered:
The same random back-off counter and/or contention window size and/or channel access priority class and/or (maximum) channel occupancy time is used for each beams;
The random back-off counter and/or contention window size and/or channel access priority class and/or (maximum) channel occupancy time is determined independently for each beams;
The start of transmission can be configured as the same or different for each beam;
Self-deferral, which can be used to align transmission for multiple beams or wait LBT completed in other beam(s).

Compared with other beam(s), if the device completes LBT in advance on beam(s), then the device can : Case-1: stop sensing and perform sensing for a period immediately before the start of the transmission on the beam(s); or Case-2: continue to perform sensing with period before the start of the transmission on the beam(s). Herein, period can be 1, 2, 3, 4, 5, 6, 7, 8, 9, 10, or any combination of the above mentioned value. The units can be microseconds (us), or milliseconds(ms), or nanosecond(ns). or if the device is about to complete LBT procedure on beam(s), then the device can : Case-1: stop sensing and start continuing to perform LBT until the same random back-off value is reached in other beam(s); Case-2: perform additional CCA detection and start continuing to perform unfinished LBT procedure until the same random back-off value is reached in other beam(s); Case-3: continue to perform uncompleted LBT procedure. After LBT is finished on beam(s) and LBT is still being performed on the other beam(s), then the device can stop operation until transmission start, or continue to perform additional CCA detection until LBT is completed on other beam(s) or transmission start. Wherein, LBT procedure to be completed can be understood as random back-off value has been decremented to a specific value. The special value can be determined by at least one of DCI signaling, RRC signaling, MAC signaling, default/pre-defined. The minimum special value can be 1.

For the beam(s) that LBT is not completed or performed failure before transmission start, current random back-off value and/or contention window size and/or channel access priority class and/or the times of configured multiple one-shot LBT, and/or LBT type and/or LBT mode can be keep and used for the next transmission corresponding to the beam(s). Optionally, random back-off value and/or contention window size and/or channel access priority class and/or the times of configured multiple one-shot LBT, and/or LBT type and/or LBT mode can be reset or configured as smaller (or simpler LBT type, or more channel access chance LBT mode) than the previous.

If Cat4/Cat3 LBT is performed successfully in one or more beams, then the device can transmit transmission in beams that LBT has been performed successfully.

For example, if one-shot LBT is used for each beam, then at least one of the following can be considered:
The start time of CCA detection for each beam is the same or different;
The start time of CCA detection for each beam can be fix, or random;
Same sensing duration length for each beam;
Optionally, for one-shot LBT, channel access priority class and/or (maximum) channel occupancy time can be introduced. If supported, channel access priority class and/or (maximum) channel occupancy time can be the same or different for each beam;
The start of transmission can be configured as the same or different for each beam;
If one-shot LBT is performed successfully in one or more beams, then the device can transmit transmission in beam(s) that LBT has been performed successfully.

If one-shot LBT is performed failure or channel is assessed as busy in one or more beams, then the device can try to perform an additional one-shot LBT before transmission or switch to multiple one-shot LBT on beam(s) that LBT has been performed failure before transmission. Herein, the number of additional one-shot LBT can be determined by pre-defined, and/or, DCI signaling, and/or RRC signaling, and/or MAC CE signaling indication, and/or no limitation as long as one-shot LBT is performed before transmission.

The difference of one-shot LBT and multiple one-shot LBT is that if multiple one-shot LBT is used for each beams, then the device can have multiple times the chance of access channel on each beams.

### Method-2:

Compared with Method-1, Method-2 provides a method that LBT type X1 is used for one or more beams, while LBT type X2 is used for other beams. Wherein, LBT type X1 is different with LBT type X2. Compared with LBT Type X2, LBT type X1 is a relative complicated channel access procedure; LBT type X1 can be Cat4 LBT, or Cat3 LBT, or one-shot LBT, or multiple one-shot LBT. Preferably, LBT type X2 can be one-shot LBT, or multiple one-shot LBT or No LBT. Optionally, for some beams, No LBT is used.

In general, LBT type X1 is used for one or more beams. Optionally, for these beam(s), with poor channel condition/state or strong interference, or indicated by at least one of DCI signaling, RRC signaling, MAC CE signaling, pre-defined/default, or the reception or decoded situation for the previous transmission, or HARQ-ACK feedback indication or Configured grant downlink feedback information(CG-DFI), or Configured grant uplink control information(CG-UCI). LBT type X2 (e.g., one-shot LBT or multiple one-shot or No LBT) is used for one or more beams. Optionally, for these beam(s), with relative interference weak or less bad channel condition/state, or indicated by at least one of DCI signaling, RRC signaling, MAC CE signaling, pre-defined/default, or the reception or decoded situation for the previous transmission, or HARQ-ACK feedback indication or Configured grant downlink feedback information(CG-DFI), or Configured grant uplink control information(CG-UCI). Optionally, No LBT is used for one or more beams. Optionally, for these beam(s), with allowed interference/weak or less bad channel condition/state, or indicated by at least one of DCI signaling, RRC signaling, MAC CE signaling, pre-defined/default, or the reception or decoded situation for the previous transmission, or HARQ-ACK feedback indication or Configured grant downlink feedback information(CG-DFI), or Configured grant uplink control information(CG-UCI). Optionally, for more beams that are configured using the same LBT type, any one or more method mentioned in Method-1 can be applied. For one beam, any one or more method mentioned in embodiment 1 can be applied.

Optionally, the start of transmission can be configured as the same or different for each beam;
Example 1: if Cat4/3 LBT/multiple one-shot LBT is performed/configured/used for the device, when Cat4/3 LBT/multiple one-shot LBT will be completed on the beam, the device performs one-shot LBT or multiple one-shot LBT on other beam(s) before transmission. Optionally, if the channel is detected as busy during Cat4/3 LBT procedure/multiple one-shot LBT on the beam, then the device will continue to perform random back-off CCA detection/multiple one-shot LBT for the beam. while perform one-shot LBT/multiple one-shot LBT in other beams. Until random back-off counter N is decreased to 0 on the beam, and/or last a one-shot LBT and/or one-shot LBT is performed successful or channel is assessed as idle on at least one of other beams. Optionally, the device can transmit transmission on beam(s) that channel is assessed as idle. Otherwise, for the beam(s) that LBT is not completed or performed failure before transmission start, current random back-off value and/or contention window size and/or channel access priority class and/or the times of configured multiple one-shot LBT, and/or LBT type and/or LBT mode can be keep and used for the next transmission corresponding to the beam(s). Optionally, random back-off value and/or contention window size and/or channel access priority class and/or the times of configured multiple one-shot LBT, and/or LBT type and/or LBT mode can be reset or configured as smaller (or simpler LBT type, or more channel access chance LBT mode) than the previous.
Example 2: the different with example 1 is that the device performs Cat4/3 LBT/multiple one-shot LBT on more beams. Wherein, the method of performing Cat4/3 LBT/multiple one-shot LBT on more beams can consider at least one of the following:
   The same random back-off counter and/or contention window size and/or channel access priority class and/or (maximum) channel occupancy time is used for these beams;
   The random back-off counter and/or contention window size and/or channel access priority class and/or (maximum) channel occupancy time is determined independently for each of these beams;
   The start of transmission can be configured as the same or different for each beam;
   Self-deferral, which can be used to align transmission for multiple beams or wait LBT completed in other beam(s).
   The start time of CCA detection for each beam is the same or different;
   The start time of CCA detection for each beam can be fix, or random;
   Same sensing duration length for each beam;
   If the device completes LBT in advance on at least one of these beams, then the device can : Case-1: stop sensing and only perform a sensing with a period immediately before the start of the transmission on the beam(s) or the beam(s) on which random back-off counter N will be decreased to 0 with Cat4/3 LBT or the last one-shot LBT will be performed; or Case-2: continue to perform CCA detection with period before the start of the transmission on the beam(s) or Cat4/3 LBT/multiple one-shot LBT is still performed on other beam(s); Case-3: wait for other beam(s) that are performing LBT procedure until the starting of the transmission; Case-4: perform a CCA detection with period on each beam simultaneously before transmission. Herein, period can be 1, 2, 3, 4, 5, 6, 7, 8, 9, 10, or any combination of the above mentioned value. The units can be microseconds (us), or milliseconds(ms).

If the device is about to complete LBT on at least one of these beams, then the device can : Case-1: stop sensing and start continuing to perform LBT until the same random back-off value is reached or the times of performed multiple one-shot LBT is reached the special value or one-shot LBT will be performed in other beam(s); Case-2: perform additional CCA detection and start continuing to perform unfinished LBT procedure until the same random back-off value or the times of performed multiple one-shot LBT is reached the special value or one-shot LBT will be performed is reached in other beam(s); Case-3: continue to perform LBT procedure on those beams. After LBT is finished on beam(s) and LBT is still being performed on the other beam(s), then the device can stop operation until transmission start, or continue to perform additional CCA detection until LBT is completed on other beam(s) or transmission start.

Optionally, for other beam(s) that is still at performing Cat4/3 LBT procedure/multiple one-shot LBT, stop the current Cat4/3 LBT operation/multiple one-shot LBT and start performing one or more CCA detection with period to align transmission or CCA detection on beam(s) that is configured using one-shot LBT or multiple one-shot LBT. Optionally, the condition of stopping the current Cat4/3 LBT/multiple one-shot LBT operation can be at least one of: consecutive S times detection the channel corresponding to the beam as idle; random back-off counter N or the remaining times of performing multiple one-shot LBT is smaller than the third threshold value;

Optionally, for the beam(s) that LBT is not completed or performed failure before transmission start, current random back-off value and/or contention window size and/or channel access priority class and/or the times of configured multiple one-shot LBT, and/or LBT type and/or LBT mode can be keep and used for the next transmission corresponding to the beam(s). Optionally, random back-off value and/or contention window size and/or channel access priority class and/or the times of configured multiple one-shot LBT, and/or LBT type and/or LBT mode can be reset or configured as smaller (or simpler LBT type, or more channel access chance LBT mode) than the previous.

Optionally, for more beams that are configured using the same LBT type, any one or more method mentioned in Method-1 can be applied. Or any one or more method mentioned in this patent can also be used herein.

Further, optionally, for the beam(s) that is not configured to perform Cat4/3 LBT/multiple one-shot LBT, the device performs one-shot LBT or multiple one-shot LBT or No LBT or a CCA detection with period as the above mentioned before transmission.

Optionally, for the beam(s) that is performed for a certain LBT type, its LBT type can be changed/kept on beam(s) based on at least one of : channel condition/state, or indicated by at least one of DCI signaling, RRC signaling, MAC CE signaling, pre-defined/default, or the reception or decoded situation for the previous transmission, or HARQ-ACK feedback indication or Configured grant downlink feedback information(CG-DFI), or Configured grant uplink control information(CG-UCI).

Example 3: The device performs multiple one-shot LBT on one or more beams, while for the beam(s) that is not configured to perform multiple one-shot LBT, the device performs one-shot LBT or No LBT. For the case of one-shot LBT configured on for the beam(s) that is not configured to perform multiple one-shot LBT, when the device performs the last one-shot LBT on one or more beams, then for the other beam(s), one-shot LBT is also performed; If one-shot LBT is performed successfully on at least one of all beams, then the device will transmit transmission on beam(s) that LBT is performed successfully.

Any one or more of the above methods on LBT (e.g., determine LBT success or failure, and/or handling LBT failure, or other, and so on) can be used independently, or in some certain cases/scenarios.

### EMBODIMENT 3

For the transmission with multiple beams, a method on LBT performed on specific beam(s) will be introduced in this embodiment.

The basic idea is that the device only needs to perform LBT operation on the beam(s) that need to executive LBT. Specifically, on which beam(s) LBT is performed, and/or what LBT type to use can be determined/indicated through at least one of the following: DCI signaling, MAC CE signaling, RRC signaling, the result of interference measurement on beam, the status of receiving information on beam, the situation of performing LBT on beam in the previous or latest M times transmission, pre-defined/default, or the reception or decoded situation for the previous transmission, or HARQ-ACK feedback indication or Configured grant downlink feedback information(CG-DFI), or Configured grant uplink control information(CG-UCI). Wherein, M is a positive integer, e.g., 1,2,3,4,5,6,7,8,9,10, or any combination of the above value. Preferably, the previous or latest M times transmission can be replaced within a time period, or a timer.

Optionally, if same LBT type is configured/used for specified beam(s) that need to perform LBT, or different LBT type is configured/used for the different beam(s) or beam groups that need to perform LBT, then any one or more method mentioned in the embodiment 2 can be also applied herein. If one LBT is configured/used for these specified beam(s) that need to perform LBT, then any one or more method mentioned in the embodiment 1 can be also applied herein.

Optionally, for the beam(s) that does not need to perform LBT, No LBT is applied.

Optionally, LBT configured in beam(s) and/or No LBT used in beam(s) can be changed/kept on beam(s) based on at least one of : channel condition/state, or indicated by at least one of DCI signaling, RRC signaling, MAC CE signaling, pre-defined/default, or the reception or decoded situation for the previous transmission, or HARQ-ACK feedback indication or Configured grant downlink feedback information(CG-DFI), or Configured grant uplink control information(CG-UCI). That is to say, for the current transmission, LBT is used. For the next transmission(or time period or timer) or the subsequent transmission(or time period or timer), LBT type may be changed or No LBT can be used. and vice versa.

For example, assuming that the device will transmit transmission on beam #1, beam #2, beam #3, beam #4. If LBT is indicated to be performed in beam #1, beam #3, then the device only needs to perform LBT procedure on beam #1 and beam #3, respectively or perform a LBT that covers beam #1 and beam #3. If LBT is performed successfully in beam #1 and/or beam #3, then the device can transmit transmission in beam #1, and/or beam #3 and beam #2 and beam #4.

Optionally, LBT on beam #1, beam #3 and/or No LBT for beam #2, beam #4 can be used based on the indication of at least one of DCI signaling, MAC CE signaling, RRC signaling, or in the same way as before if LBT is used for the previous transmission, or use a LBT which can evaluate channel condition more fully than LBT used in previous transmission (e.g., larger contention window size, or more complicated LBT procedure and so on) or, default/pre-defined way.

Optionally, if the channel condition corresponding to beam is evaluated as good/idle/with less(or weak) interference in the current transmission/a time period/timer, then for the next transmission/outside of a time period/expiration of timer, the device can perform No LBT or simpler LBT type on beam(s) that is regarded as channel condition corresponding to beam to be good/idle/with less(or weak) interference. On the contrary, for the beam(s) that LBT is not performed, if the channel condition corresponding to beam is regarded as bad/busy/with strong(or large) interference in the current transmission/a time period/timer, then the device can perform LBT on beam(s) that is regarded as channel condition corresponding to beam to be bad/busy/with strong(or large) interference for the next transmission/outside of a time period/expiration of timer. Preferably, on how to determine the channel condition corresponding to beam evaluated as good/idle/with less(or weak) interference in a time period/timer can be considered at least one of: the times of LBT successes, the times of consecutive LBT successes, the times of successfully received and/or correctly decoded, the times of HARQ-ACK received, the times of received receiver assistance information indicated as channel idle for receiver and/or transmitter. Further, if the times the above mentioned is larger than or equal to the fourth threshold value, then thinks channel condition corresponding to beam to be good/idle/with less(or weak) interference. The same rule is also applicable for determining the channel condition corresponding to beam evaluated as bad/busy/with strong(or large) interference in a time period/timer.

Specifically, based on the above, we can see that from LBT(No LBT) to No LBT (LBT)for a beam can be triggered by signaling indication or event.

### EMBODIMENT 4

For the transmission with multiple beams, if LBT is performed failure on one or beams, then the following method can be considered:
Scheme-1: Directly no transmission on beam(s) that LBT is performed failure. But the device can try to access channel on the next transmission corresponding to the beam(s).
Scheme-2: suspend the current transmission on beam (s) that LBT is performed failure. While for the next transmission corresponding to the beam(s), resume the previous LBT procedure or continue to perform the previous incomplete LBT procedure until the channel is evaluated as available or idle.
Scheme-3: switch to other carrier or bandwidth part or sub-band or RB set.
Scheme-4: if the times of channel detected as busy is larger than the fifth threshold value, then switch LBT type for the beam. For example, for multiple one-shot LBT, if the times of one-shot LBT to be performed is Y, and the times of channel detected as busy is Y1, when Y1 is larger than the fifth threshold value, then allow the device to switch LBT type for the beam. Wherein, Y>=Y1. for example, for Cat4/3 LBT, the times of channel detected as busy in performing random back-off CCA detection can be used for determining whether to need to switch LBT type for the beam. The same principle can be applied for the case of the times of channel detected as busy in a time period or timer.

### EMBODIMENT 5

For time domain multiplexing of transmissions in different beams, at least one of the following can be considered:
For the beginning of COT or outside of COT, at least one of the following LBT mode can be considered:
Method-1: The device performs one directional LBT that covers all different beam(s) in the time domain;
Optionally, one directional LBT herein can also be seen as omni-directional LBT.

For method-1, if the device can access channel with directional LBT (or LBT successes) before transmission corresponding to beam(s), then the device transmits transmission for beam(s).

Otherwise, if the device cannot access channel with directional LBT (or LBT failure) before transmission corresponding to beam(s), at least one of the following can be considered:
Alt-1: The device will give up to transmit transmission in the first transmission beam. And attempt to access channel with the same directional LBT that covers the remaining different beam(s) before the next transmission. Or, Optionally, the device can also use multiple beam-based directional LBT that covers the remaining different beam(s) before the next transmission. Wherein, LBT type can be same or different with the previous transmission. Wherein, LBT type can be Cat4 LBT, or Cat3 LBT, or one-shot LBT, or multiple one-shot LBT or No LBT. Optionally, if the same LBT type is used, different channel access priority class or parameter(s) can be used/configured. For multiple beam-based directional LBT, it can refer to the LBT as mentioned in embodiment 2 and 3 for multiple LBT beams case.
Alt-2: The device attempts to assess channel status for each beams in the time domain or for the current/next transmission beam. For example, the device switches one directional LBT to one multiple beam-based directional LBT, which covers all different beam(s) in the time domain. Wherein, LBT type can be same or different with the previous transmission. Wherein, LBT type can be Cat4 LBT, or Cat3 LBT, or one-shot LBT, or multiple one-shot LBT or No LBT. Optionally, if the same LBT type is used, different channel access priority class or parameter(s) can be used/configured. Optionally, for multiple beam-based directional LBT, it can refer to the LBT as mentioned in embodiment 2 and 3 for multiple LBT beams case.

If LBT is performed successfully or channel is detected as idle for at least one of beams, then the device will transmit transmission on the beam(s) that LBT is performed successfully or channel is detected as idle. Optionally, after LBT successes, the device can transmit transmission using the LBT successful beam(s) in the time domain (e.g., If LBT successful beams is beam #1, beam #3, beam #5 and they responds to time resource #1, time resource #3, time resource #5, respectively, then in the actual transmission, beam #1, beam #3, beam #5 will be transmitted in actual time resource #1, actual time resource #2, actual time resource #3), or the device can transmit transmission in original relationship between beam index and time resource index. But in the time domain corresponding to LBT failure performed before, the device can perform a direction LBT that only covers next transmission beam or perform multiple beam based LBT that covers the subsequent beam(s) corresponding to LBT failure performed before. If LBT successes, then allow to transmit. Otherwise, give up the current transmission on this beam.

Alt-3: The device can attempt to switch corresponding transmission and/or LBT operation to another Bandwidth Part(BWP) or sub-band or RB set or Carrier. Detailed LBT method or handling method for LBT failure can refer to the above mentioned alternative.

Method-2: The device performs one multiple beam-based directional LBT that covers different beams in the time domain.

For Method-2, multiple beam-based directional LBT that covers different beams can refer to the handling rule of the LBT mentioned in embodiment 2 and 3 for multiple LBT beams case.

Optionally, If LBT is performed successfully or channel is detected as idle for at least one of beams, then the device will transmit transmission on the beam(s) that LBT is performed successfully or channel is detected as idle. Optionally, after LBT successes, the device can transmit transmission using the LBT successful beam(s) in the time domain (e.g., If LBT successful beams is beam #1, beam #3, beam #5 and they responds to time resource #1, time resource #3, time resource #5, respectively, then in the actual transmission, beam #1, beam #3, beam #5 will be transmitted in actual time resource #1, actual time resource #2, actual time resource #3), or the device can transmit transmission in original relationship between beam index and time resource index. But in the time domain corresponding to LBT failure performed before, the device can perform a direction LBT that only covers next transmission beam. If LBT successes, then allow to transmit. Otherwise, give up the current transmission on this beam.

Optionally, for the beam(s) that LBT is performed failure before(e.g., at the beginning of COT), the device can perform a direction LBT before transmission beam(s) that LBT performed failure or perform multiple beam based LBT before transmission beam(s) that covers the subsequent beam(s) corresponding to LBT performed failure before. Optionally, random back-off value and/or contention window size and/or channel access priority class and/or the times of configured multiple one-shot LBT, and/or LBT type and/or LBT mode can be keep and used for the transmission corresponding to the beam(s). Optionally, random back-off value and/or contention window size and/or channel access priority class and/or the times of configured multiple one-shot LBT, and/or LBT type and/or LBT mode can be reset or configured as smaller (or simpler LBT type, or more channel access chance LBT mode) than the previous.

Method-3: The device performs one directional LBT that covers the first transmission beam.

For method-3, as long as LBT is performed successful in the first transmission beam, then the device can transmit transmission in the first transmission beam. Otherwise, if LBT is not performed successful in the first transmission beam, then at least one of the following can be considered: give up transmission in the first transmission beam. And attempt to perform one directional LBT in the next transmission beam, or with the same beam for the next transmission resource. Optionally, LBT type and/or parameter(s) in LBT can be same with that the previous, or indicated by DCI signaling, and/or, MAC signaling, and/or, RRC signaling, or changed as multiple beam based LBT; direct transmission without sensing in the first transmission beam; if the times of detection channel as idle in LBT procedure is larger than a preset threshold value, then the device is allowed to transmit transmission in the first transmission beam; the device will try to use one-shot LBT further to assess whether the current first beam is idle. If yes, transmit transmission in the first transmission beam. Otherwise, no transmission in the first transmission beam; the device change current LBT mode to multiple beam-based directional LBT that covers at least one of all different beams;

Within the COT, at least one of the following LBT mode can be considered:
Scheme-1: The device transmits transmission in the switching beam without LBT operation or the device can perform a No LBT for beam switching. Optionally, No LBT is used in at least one of the following case: DCI signaling, MAC signaling, RRC signaling-defined, channel state assessed in the beginning of COT/previous, receiver assistance information, HARQ-ACK feedback, CG-DFI, CG-UCI .

For scheme-1, if the device does not assess channel state for switching beam, while direct transmit transmission without sensing operation, then it will lead to performance degradation to some extent due to the channel state of each switching beam within COT cannot be determined/guaranteed, or only one channel evaluation (LBT) performed at the beginning of cot cannot represent the channel condition on different switched beams Within COT due to within COT some beams experience an unoccupied channel and the other beams encounter a channel with higher interference from other coexisting nodes.

Scheme-2: The device performs an additional directional LBT that covers the subsequent beam(s) or need to performed LBT beam(s) for beam switching.

Optionally, additional directional LBT herein can also be seen as omni-directional LBT.

For Scheme-2, the handling rule for Method-1 in this embodiment can be applied herein.

Optionally, on which switching beam or need to performed LBT beam(s) additional LBT is used is based on at least one of: DCI signaling, MAC signaling, RRC signaling-defined, channel state assessed in the beginning of COT/previous, receiver assistance information, HARQ-ACK feedback, CG-DFI, CG-UCI.

If LBT successes, transmission on the current transmission. Otherwise, if LBT failed, give up the current transmission, or any one or more method mentioned on LBT failure handling in this patent can be applied herein (or, for the current transmission or the next transmission).

Scheme-3: The device performs an additional multiple beam-based directional LBT that covers the subsequent beam(s) or need to performed LBT beam(s) for beam switching.

For Scheme-3, the handling rule for Method-2 in this embodiment or embodiment 2 or embodiment 3 can be applied herein.

Optionally, on which switching beam or need to performed LBT beam(s) additional multiple beam-based directional LBT is used is based on at least one of: DCI signaling, MAC signaling, RRC signaling-defined, channel state assessed in the beginning of COT/previous, receiver assistance information, HARQ-ACK feedback, CG-DFI, CG-UCI.

If LBT successes, transmission on the current transmission. Otherwise, if LBT failed, give up the current transmission, or any one or more method mentioned on LBT failure handling in this patent can be applied herein (or, for the current transmission or the next transmission).

Scheme-4: The device performs an additional directional LBT that covers the next transmission beam for beam switching.

For Scheme-4, the handling rule for Method-3 in this embodiment or any one or more method in embodiment 1 can be applied herein. If LBT successes, transmission on the current transmission. Otherwise, if LBT failed, give up the current transmission, or any one or more method mentioned on LBT failure handling in this patent can be applied herein (or, for the current transmission or the next transmission).

For LBT within COT case, on which switching beam(s) LBT is performed, and/or what LBT type to use can be determined/indicated through at least one of the following: DCI signaling, MAC CE signaling, RRC signaling, the result of interference measurement and/or reporting before the current transmission within COT, the situation of performing LBT before the current transmission.

Preferably, for multiple beam-based directional LBT, if LBT is performed successful at least one of beam(s), then the following transmission method can be considered: the current transmission with beams that cover the subsequent beams that LBT has been performed successfully.

In some embodiments, the above mentioned LBT can be Cat4 LBT, or Cat3 LBT, or one-shot LBT (Cat2 LBT), or multiple one-shot LBT or No LBT or any named/defined LBT mechanism.

For example, for the above mentioned method and/or scheme, at least one of the following can be considered:
For the previous transmission, if Cat4/3 LBT is used and performed successfully, No LBT can be used for the next (or subsequent )transmission with same beam; or the same LBT type is used for switching beam/the next (or subsequent ) transmission with same beam; or different LBT type and/or mode (e.g., one-shot LBT, or multiple one-shot LBT, multiple beam based LBT, or No LBT) can be used for switching beam/the next (or subsequent ) transmission with same beam. If Cat4/3 LBT is used and performed failure, the same LBT type is used for the next (or subsequent ) transmission with same beam/switching beam/switched carrier/BWP/sub-band; or different LBT type and/or mode (e.g., one-shot LBT, or multiple one-shot LBT, multiple beam based LBT, or No LBT) can be used for the next (or subsequent ) transmission with same beam/switching beam/switched carrier/BWP/sub-band;
For the previous transmission, if one-shot LBT is used and performed successfully, No LBT can be used for the next (or subsequent )transmission with same beam; or the same LBT type is used for switching beam/the next (or subsequent ) transmission with same beam; or, different LBT type and/or mode (e.g., multiple one-shot LBT, multiple beam based LBT, or No LBT) can be used for switching beam/the next (or subsequent ) transmission with same beam. If one-shot LBT is used and performed failure, the same LBT type is used for the next (or subsequent ) transmission with same beam/switching beam/switched carrier/BWP/sub-band; or different LBT type and/or mode (e.g., Cat4/3 LBT, or multiple one-shot LBT, multiple beam based LBT, or No LBT) can be used for the next (or subsequent ) transmission with same beam/switching beam/switched carrier/BWP/sub-band;
For the previous transmission, if multiple one-shot LBT is used and performed successfully, No LBT can be used for the next (or subsequent )transmission with same beam; or the same LBT type is used for switching beam/the next (or subsequent ) transmission with same beam; or different LBT type and/or mode (e.g., Cat 4/3 LBT, one-shot LBT, multiple beam based LBT, or No LBT) can be used for switching beam/the next (or subsequent ) transmission with same beam. If multiple one-shot LBT is used and performed failure, the same LBT type is used for the next (or subsequent ) transmission with same beam/switching beam/switched carrier/BWP/sub-band; or different LBT type and/or mode (e.g., Cat4/3 LBT, or one-shot LBT, multiple beam based LBT, or No LBT) can be used for the next (or subsequent ) transmission with same beam/switching beam/switched carrier/BWP/sub-band;
For the previous transmission, if No LBT is used and performed successfully, No LBT can be used for the next (or subsequent )transmission with same beam; or the same LBT type is used for switching beam/the next (or subsequent ) transmission with same beam; or different LBT type and/or mode (e.g., Cat 4/3 LBT, one-shot LBT, multiple one-shot LBT, multiple beam based LBT, or No LBT) can be used for switching beam/the next (or subsequent ) transmission with same beam. If No LBT is used, the same LBT type is used for the next (or subsequent ) transmission with same beam/switching beam/switched carrier/BWP/sub-band; or if information received and/or decoded failure or the indication of received assistance information for No LBT used, different LBT type and/or mode (e.g., Cat4/3 LBT, or one-shot LBT, multiple one-shot LBT, multiple beam based LBT) can be used for the next (or subsequent ) transmission with same beam/switching beam/switched carrier/BWP/sub-band;

### EMBODIMENT 6

For multiple beam-based directional LBT or directional LBT, at least one of the following situation needs to be resolve/handled/determined further:
Case-1: is the sensing beam a transmission beam or a received beam?

If the width of received beam and transmission beam is (almost) same, and partially or fully overlapping with each other, then similar interference states on received beam and transmission beam can be assumed. Therefore, the device can determine that the sensing beam can be a transmission beam or a received beam.

When received beam is partially or (almost) fully overlapping with transmission beam, then CCA detection threshold T1 is used for narrow sensing beam with narrow transmission beam.

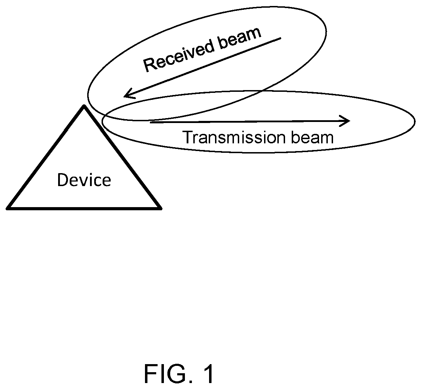

If received beam can be determined to be sensing beam, when received beam is wider than transmission beam, (optionally, a received beam received by a device can cover or partially cover a transmission beam of the device, as shown in FIG. 1) then different interference situation can be observed on received beam and transmission beam. Based on this, evaluation channel busy/idle status can consider to use different CCA detection threshold for wider sensing beam with narrow transmission beam compared with narrow sensing beam with narrow transmission beam. For example, assumed that CCA detection threshold T1 is used for narrow sensing beam with narrow transmission beam, then for wider sensing beam with narrow transmission beam case, an additional factor can be introduced on top of CCA detection threshold T1. wherein, an additional factor can be added or subtracted from the CCA detection threshold T1. the unit is dBm. On the contrary, the same rule can also be applied.

Besides, sensing beam can also determined by transmission beam. For example, sensing/LBT operation is performed in the transmission beam. For this case, the device can relative accurately obtain the channel/interference state of current transmission beam.

Case-2: for multiple beam-based directional LBT, the CCA detection threshold for each beam is same?

If the width of each transmission beam is same, and the width of transmission beam and received beam is same or received beam and transmission beam is (almost ) fully overlapping with each other, then same CCA detection threshold can be used for each LBT beam.

If the width of each transmission beam is same, but the width of transmission beam and received beam is different and/or received beam can only partially cover transmission beam, then CCA detection threshold is different for different the width of transmission beam or received beam. Wherein, transmission beam or received beam can be determined to be sensing beam.

### EMBODIMENT 7

If directional LBT is supported, then contention window size is adjusted based on beam level (e.g., contention window size adjustment is for beam) or based on each beam index (e.g., each beam level may have its own contention window size).

Take DL contention window size adjustment as an example, in the reference duration, the base station will send downlink transmission with 3 different beams to three different UEs. Wherein, the target user equipment of B_0 is UE1, the target user equipment of B_1 is UE2, the target user equipment of B_2 is UE3, then

If the ratio/number of received HARQ-ACK for B_1 before the next DL transmission to UE2 is less than preset threshold value, then the CW size for beam B_1 for UE2 will be extended to the next available CWS; otherwise, reset CWs to the minimum CW size for beam B_1 for UE2.

If the ratio/number of received HARQ-ACK for B_2 before the next DL transmission to UE3 is larger than or equal to preset threshold value, then the CW size for beam B_2 for UE3 will reset CWs to the minimum CW size; otherwise, extend to the next available CWS for beam B_1 for UE2.

Further, DL reference duration can be defined based on beam level or each beam index.

Before the downlink transmissions with different beams, a wide directional LBT or omni-directional LBT is used. In this case, a device may refer to the feedback results of all beams in a reference duration to adjust the CW size of the next downlink transmission.

The above rule can also be applied for the UL.

The following section describes example rules and techniques for performing channel access procedure:
1. For directional LBT, (e.g., as described in Embodiment 6)
   a. Sensing beam can be one of the following: transmission beam; received beam;
      a.) If Sensing beam is received beam,
         i. When received beam is partially or (almost) fully overlapping with transmission beam, then CCA detection threshold T1 is used for narrow sensing beam with narrow transmission beam;
            1. The determination of CCA threshold will consider the factor of beamforming gain, and/or the width of transmission beam.
         ii. When received beam is wider than transmission beam, or, received beam covers or partially cover transmission beam, or for wider sensing beam with narrow transmission beam case, an additional factor can be introduced on top of CCA detection threshold T1.
            1. For the case of receiver beam is narrower than transmission, the method of "ii" can also applied.
      b.) If sensing beam is transmission beam
         i. Same rule as Note mentioned in the above "i"
2. For multiple beams LBT,
   a. CCA threshold for each beam can be same or different (e.g., as described in Embodiment 6)
      a). If the width of each transmission beam is same, and satisfy "i" of "a)" of "a" of (1) point or "i" of "b)" of (1) point, then same CCA detection threshold can be used for each LBT beam.
      b). If the width of each transmission beam is same, satisfy "ii" of a) of "a" of (1) point, then CCA detection threshold is different for different transmission beam or received beam. Wherein, transmission beam or received beam can be determined as sensing beam.
   b. The rule of multiple beams based LBT,
      LBT type can be at least one of Cat4 LBT, or Cat3 LBT, or one-shot LBT (also called as Cat2 LBT), or multiple one-shot LBT, or No LBT
      a). The same LBT type is used for each LBT beam; (e.g., as described in Method-1 of Embodiment 2)
         i. If LBT type is Cat4/3, at least one of the following can be considered:
            1. The same random back-off counter is used for each beams;
            2. The random back-off counter is determined independently for each beams;
            3. If the device completes LBT in advance on beam(s), then the device can:
               Case-1: stop sensing and perform sensing for a period immediately before the start of the transmission on the beam(s); or
               Case-2: continue to perform sensing with period before the start of the transmission on the beam(s).
            4. If LBT is performed successfully in one or more beams, then the device can transmit transmission in beams that LBT has been performed successfully.
         ii. If one-shot LBT is used for each beams, then at least one of the following can be considered:
            1. the start time of CCA detection for each beams is the same or different;
            2. the start time of CCA detection for each beams can be fix, or random;
            3. Same sensing duration length for each beams;
            4. If one-shot LBT is performed successfully in one or more beams, then the device can transmit transmission in beams that LBT has been performed successfully.
            5. If one-shot LBT is performed failure or channel is assessed as busy in one or more beams, then the device can try to perform an additional one-shot LBT before transmission or switch to use multiple one-shot LBT on beams that LBT has been performed failure before transmission. Herein, the number of additional one-shot LBT can be determined by pre-defined, and/or, DCI signaling, and/or RRC signaling, and/or MAC CE signaling indication, and/or without limitation as long as one-shot LBT is performed before transmission
      b). The different LBT type is used for different beam group. (e.g., as described in Method-2 of Embodiment 2)
         i. On which beam group Which LBT type to use on which beam group depends on at least one of channel condition/state, intensity of interference, the indication of DCI signaling, RRC signaling, MAC CE signaling.
3. Uses case of multiple beams LBT for the transmission with different beams
   o Use case 1: (e.g., as described in Embodiment 3)
      ▪ In the transmission beams, the device performs LBT operation on which beam(s) and/or using what LBT type based on at least one of the indication of DCI signaling, the indication of MAC CE signaling, the indication of RRC signaling, the result of interference measurement and/or reporting on beam, the status of receiving information on beam, the situation of performing LBT on beam in the previous or latest M times transmission or a time period or timer.
      ▪ In some embodiments, LBT type can be at least one of Cat4 LBT, or Cat3 LBT, or one-shot LBT (also called as Cat2 LBT), or multiple one-shot LBT, or No LBT. In some embodiments, no indication for beam will represent No LBT can be applied on the beam
   o Use case 2:
      ▪ For the transmission with multiple different beams in SDM, (e.g., as described in Method-1 of Embodiment 2, Method-2 of Embodiment 2, Embodiment 3) can be applied.
      ▪ For LBT failure of multiple beams based LBT, the method of Embodiment 4 can be referred.
      ▪ For the transmission with multiple different beams in SDM, if directional LBT is used and when LBT is performed failure, Option3 of Embodiment 1 can be referred.
      ▪ Use case 3:
      ▪ For the transmission with multiple different beams in TDM,
      ▪ For the beginning of COT or outside of COT, Method-2 of Embodiment 5 can be referred.
      ▪ Within COT, Scheme-3 of Embodiment 5 can be referred.
4. Uses case of directional LBT for the transmission with different beams
   o Use case 1:
      ▪ For the transmission with multiple different beams in SDM, directional LBT with one LBT beam that covers partial or all transmission beams before transmission is used. -------Embodiment 1
      ▪ If directional LBT is performed failure, then Option1~4 of Embodiment 1 can be referred.
   ∘ Use case 2:
      ▪ For the transmission with multiple different beams in TDM,
      ▪ For the beginning of COT or outside of COT, Method-1 and Method 3 of Embodiment 5 can be referred.
      ▪ Within the COT, Scheme-2 and Scheme-4 of Embodiment 5 can be referred.
5. Adjustment of Contention window size if directional LBT is supported (e.g., as described in Embodiment 7)
   ∘ Contention window size is adjusted based on HARQ-ACK of beam level or each beam index.
   ∘ Reference duration can be defined based on beam level or each beam index.
   ∘ If a wide directional LBT or omni-directional LBT is used, then feedback results of all beams in a reference duration can be used to adjustment the CW size of the next downlink transmission.

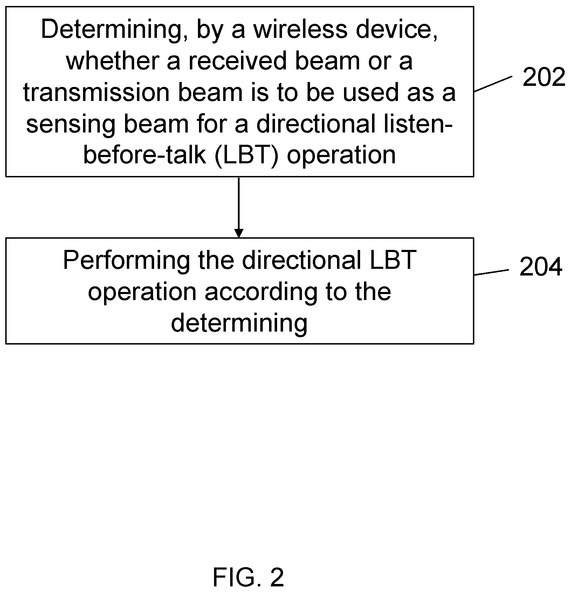

FIG. 2 shows an exemplary flowchart for channel access. Operation 202 includes determining, by a wireless device, whether a received beam or a transmission beam is to be used as a sensing beam for a directional listen-before-talk (LBT) operation. Operation 204 includes performing the directional LBT operation according to the determining.

In some embodiments, the sensing beam is determined to be either the received beam or the transmission beam, and wherein the method further comprises: determining that a clear channel assessment (CCA) detection threshold is used for a narrow sensing beam with a narrow transmission beam in response to the received beam being fully or partially overlapping with the transmission beam; or determining that the CCA detection threshold is used for the sensing beam with a plurality of transmission beams in response to the received beam being fully or partially overlapping with the plurality of transmission beams. In some embodiments, the sensing beam is determined to be either the received beam or the transmission beam, and wherein the method further comprises: determining that a clear channel assessment (CCA) detection threshold is used in response to: the received beam being wider or narrower than the transmission beam, the received beam being fully or partially overlapping with the transmission beam, the received beam being wider or narrower than a plurality of transmission beams, or the received beam being fully or partially overlapping with a plurality of transmission beams.

In some embodiments, the CCA detection threshold is determined based on: a beamforming gain, a width of the transmission beam, a coexistence scenario, a width of the sensing beam, or an additional factor that is used for reflecting a difference between an LBT beam and one or more transmission beams.

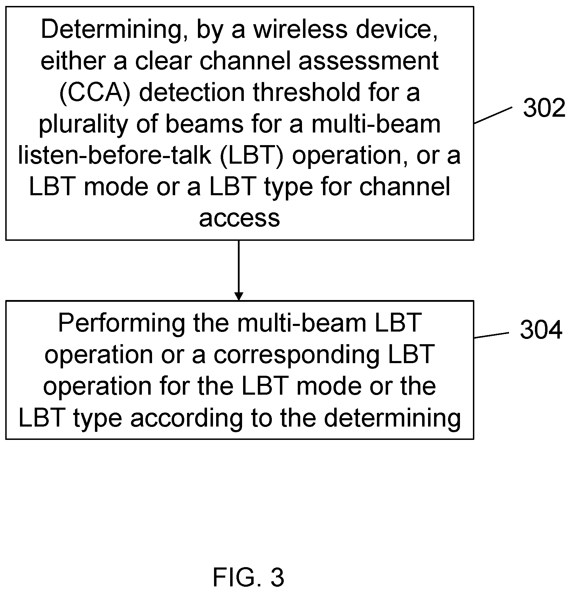

FIG. 3 shows another exemplary flowchart for channel access. Operation 302 includes determining, by a wireless device, either a clear channel assessment (CCA) detection threshold for a plurality of beams for a multi-beam listen-before-talk (LBT) operation, or a LBT mode or a LBT type for channel access. Operation 304 includes performing the multi-beam LBT operation or a corresponding LBT operation for the LBT mode or the LBT type according to the determining.

In some embodiments, the CCA detection threshold for one beam from the plurality of beams is determined to be the same as that for another beam from the plurality of beams in response to: a width of each transmission beam or of a sensing beam being same, or a received beam being fully or partially overlapping with a transmission beam. In some embodiments, the CCA detection threshold for one beam from the plurality of beams is determined to be different as that for another beam from the plurality of beams in response to: a width of each transmission beam or of a sensing beam being same, or a received beam being wider or narrower than a transmission beam, or the received beam being fully or partially overlapping with the transmission beam, and wherein a sensing beam include the transmission beam or the received beam. In some embodiments, a same LBT type is used for each beam from the plurality of beams.

In some embodiments, the LBT type includes a Cat4 LBT, Cat3 LBT, one-shot LBT or a Cat2 LBT, multiple one-shot LBT, or No LBT. In some embodiments, in response to the LBT type being a Cat4 LBT or a Cat3 LBT: a same random back-off counter or a same contention window size or a same channel access priority class or a maximum channel occupancy time is used for each beam from the plurality of beams, a random back-off counter or a contention window size or a channel access priority class or a maximum channel occupancy time is determined independently for each beam from the plurality of beams, a start of transmission is configured to be same or different for each beam from the plurality of beams, or performing a self-deferral with which a transmission for one or more beams is aligned or wait LBT is completed in one or more other beams from the plurality of beams.

In some embodiments, in response to the LBT type being a Cat4 LBT or a Cat3 LBT and in response to the wireless device completing the corresponding LBT operation in advance on one or more beams of the plurality of beams: stopping CCA detection and performing a sensing operation for a period immediately before a start of a transmission on the one or more beams, or continue to perform the sensing operation within the period before the start of the transmission on the one or more beams. In some embodiments, in response to the LBT type being a Cat4 LBT or a Cat3 LBT and in response to the wireless device is about to complete the corresponding LBT operation on one or more beams of the plurality of beams: stopping CCA detection and start to perform the corresponding LBT operation until a same random back-off value is reached in one or more other beams, or performing additional CCA detection and start to perform the corresponding LBT operation that is unfinished until the same random back-off value is reached in the one or more other beams, or continuing to perform the corresponding LBT operation that is uncompleted, wherein after the corresponding LBT operation is finished on the one or more beams, and when the corresponding LBT operation is still being performed on the one or more other beams, then stop any operation until a transmission start, or continue to perform additional CCA detection until the corresponding LBT operation is completed on the one or more other beams or until the transmission start.

In some embodiments, in response to the LBT type being a Cat4 LBT or a Cat3 LBT and in response to the wireless device performs LBT failure or does not complete the corresponding LBT operation on one or more beams of the plurality of beams: keeping a random back-off value or a contention window size or a channel access priority class or LBT type or LBT mode used for a next transmission corresponding to the one or more beams, resetting the random back-off value or the contention window size or the channel access priority class or the LBT type or the LBT mode for a next transmission corresponding to the one or more beams, or configuring the random back-off value or the contention window size or the channel access priority class to be smaller or more simplified LBT type or LBT mode to improve probability of accessing channel than that of a previous beam for a next transmission corresponding to the one or more beams.

In some embodiments, in response to the LBT type being a one-shot LBT: a start time of a CCA detection or a channel access priority class or a maximum channel occupancy time for each beam of the plurality of beams is same, the start time of the CCA detection or the channel access priority class or the maximum channel occupancy time for each beam of the plurality of beams is different, the start time of the CCA detection for each beam of the plurality of beams is fixed, the start time of the CCA detection for each beam of the plurality of beams is random, a same sensing duration for one-shot LBT is used for each beam of the plurality of beams, a start of transmission is configured as same or different for each beam from the plurality of beams, or transmitting in a transmission beam an indication that the one-shot LBT is successfully performed in one or more beams of the plurality of beams. In some embodiments, in response to the LBT type being a one-shot LBT and in response to the wireless device performing a LBT failure (or determining an LBT failure) on one or more beams of the plurality of beams: performing additional one-shot LBT or multiple one-shot LBT operation before transmission, or switching from one-shot LBT to multiple one-shot LBT before the transmission. In some embodiments, the LBT mode or the LBT type or a number of the multiple one-shot LBT is: pre-defined, signaled in a downlink control information (DCI), signaled in a radio resource control (RRC), or signaled in a medium access control-control element (MAC CE). In some embodiments, the LBT type used for one or more beams or a beam group from the plurality of beams is different than that used for another one or more beams or beam group from the plurality of beams.

In some embodiments, on which of the one or more beams or beam group that the corresponding LBT operation is performed, or what LBT type to use for the plurality of beams is determined/indicated by: a channel condition or state, an intensity of interference, an indication of a downlink control information (DCI), an indication in a radio resource control (RRC), a medium access control-control element (MAC CE), a result of interference measurement on beam, an indication of received receiver assistance information on beam, a situation of performing LBT on beam in the previous or latest M times transmission, a pre-defined condition, a default, a reception or decoded situation for the previous transmission, HARQ-ACK feedback indication, configured grant downlink feedback information(CG-DFI), or configured grant uplink control information(CG-UCI).

In some embodiments, in response to the LBT type being a Cat4 LBT or a Cat3 LBT or multiple one-shot LBT on one or more beams: a same random back-off counter or a same contention window size or a same channel access priority class or a same maximum channel occupancy time or a same number of one-shot LBT is used for one or more beams, a random back-off counter or a contention window size or a channel access priority class or a maximum channel occupancy time or a number of one-shot LBT is determined independently for the one or more beams, a start of transmission is configured as the same or different for one or more beams, performing a self-deferral with which a transmission for one or more beams is aligned or wait LBT is completed in one or more other beams from the plurality of beams, or a same sensing duration for one-shot LBT is used for one or more beams. In some embodiments, in response to the LBT type being a Cat4 LBT or a Cat3 LBT or multiple one-shot LBT on one or more beams, and in response to the wireless device completing the corresponding LBT operation in advance on one or more beams: stopping a CCA detection and only performing a sensing with a period immediately before the start of transmission on one or more beams or for one or more beams on which random back-off value decreased to 0 with Cat4 LBT or a Cat3 LBT or a last one-shot LBT to be performed, or continuing to perform the CCA detection with the period before the start of the transmission on one or more beams or when Cat4 LBT or a Cat3 LBT or multiple one-shot LBT is still performed on one or more other beams, or performing a wait operation for the one or more other beams that are performing LBT procedure until the starting of the transmission, or performing the CCA detection with period on each beam simultaneously before the transmission.

In some embodiments, in response to the LBT type being a Cat4 LBT or a Cat3 LBT or multiple one-shot LBT on one or more beams, and in response to the wireless device is about to complete the corresponding LBT operation on one or more beams: stopping a CCA detection and starting to perform the corresponding LBT operation until a same random back-off value is reached or times of performed multiple one-shot LBT is reached a special value or one-shot LBT will be performed in one or more other beams, performing an additional CCA detection and starting to perform the corresponding LBT operation that is unfinished until the same random back-off value is reached in one or more other beams, or the times of performed multiple one-shot LBT is reached the special value, or one-shot LBT will be performed is reached in one or more other beams, or continuing to perform the corresponding LBT operation on one or more beams, wherein after the corresponding LBT operation is finished on one or more beams, and when the corresponding LBT operation is still being performed on the one or more other beams, then perform a stop operation until transmission start, or continue to perform additional CCA detection until the corresponding LBT operation is completed on the one or more other beams or transmission start.

In some embodiments, a condition of stopping a current Cat4LBT or a Cat3 LBT or the multiple one-shot LBT operation includes: determining that a consecutive S times detection of a channel corresponding to a beam is idle, or determining that a random back-off counter N or a remaining times of performing the multiple one-shot LBT operation is smaller than a threshold value, wherein S and N are integers. In some embodiments, in response to the LBT type being a Cat4 LBT or a Cat3 LBT or multiple one-shot LBT on one or more beams, and for one or more beams that LBT is not completed or performed failure before transmission start, include: keeping a random back-off value or a contention window size or a channel access priority class or times of configured multiple one-shot LBT, or LBT type or LBT mode used for a next transmission corresponding to one or more beams, or resetting the random back-off value or the contention window size or the channel access priority class or the times of configured multiple one-shot LBT, or LBT type or LBT mode for a next transmission corresponding to one or more beams, or configuring the random back-off value or the contention window size or the channel access priority class or times of configured multiple one-shot LBT to be smaller or more simplified LBT type or LBT mode that is beneficial to improve probability of accessing channel than that of a previous beam for a next transmission corresponding to the one or more beams. In some embodiments, in response to for the one or more beams that is not configured to perform Cat4 LBT or a Cat3 LBT or multiple one-shot LBT, the wireless device performs one-shot LBT or multiple one-shot LBT or No LBT or a CCA detection with period immediately before transmission.

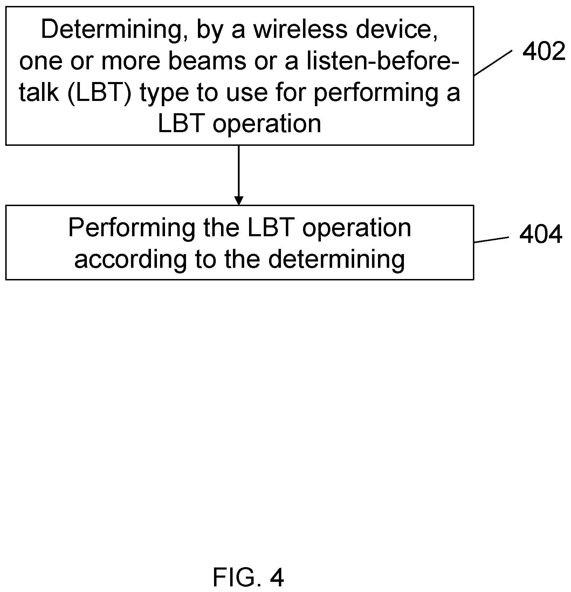

FIG. 4 shows another exemplary flowchart for channel access. Operation 404 includes determining, by a wireless device, one or more beams or a listen-before-talk (LBT) type to use for performing a LBT operation. Operation 404 includes performing the LBT operation according to the determining.

In some embodiments, the one or more beams that the LBT operation is used for a plurality of beams or the LBT type are determined based on: a downlink control information (DCI) signaling, a medium access control-control element (MAC CE) signaling, a radio resource control (RRC) signaling, a result of an interference measurement or a reporting on a beam, an indication of received receiver assistance information on the beam, a situation for performing the LBT operation on a beam in a previous or latest M times transmission or a time period or timer, a reception or decoded situation for the previous transmission, HARQ-ACK feedback indication, configured grant downlink feedback information (CG-DFI), or configured grant uplink control information (CG-UCI).

In some embodiments, at least one of the one or more beams for a plurality of beams is used for a same LBT type or different LBT type. In some embodiments, for at least one of the one or more beams for a plurality of beams that is not indicated using LBT, No LBT operation is applied. In some embodiments, the LBT operation configured in the one or more beams or No LBT operation used in one or more beams is changed or kept on beam for a next transmission or time period or timer or a subsequent transmission or time period or timer based on: a channel condition or state, DCI signaling, RRC signaling, MAC CE signaling, pre-defined or default, a reception or decoded situation for the previous transmission, HARQ-ACK feedback indication, configured grant downlink feedback information (CG-DFI), or configured grant uplink control information (CG-UCI). In some embodiments, the LBT type includes a Cat4 LBT, Cat3 LBT, one-shot LBT or a Cat2 LBT, multiple one-shot LBT, or No LBT.

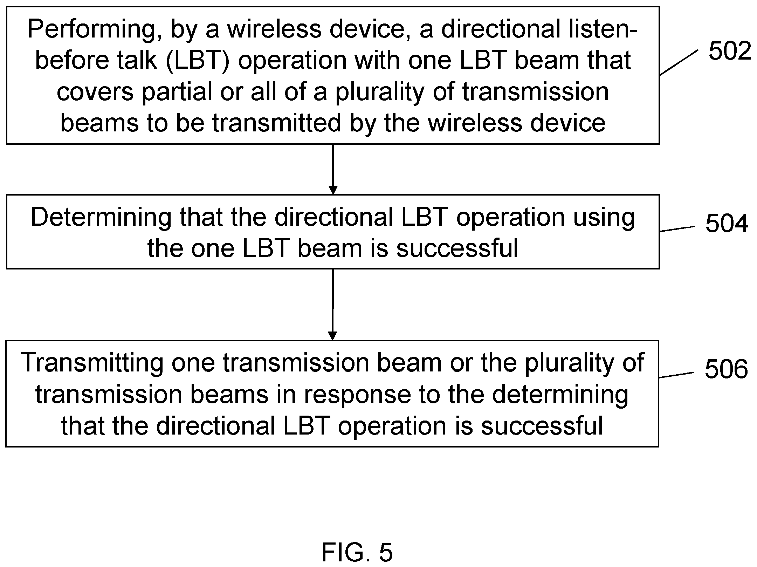

FIG. 5 shows another exemplary flowchart for channel access. Operation 502 includes performing, by a wireless device, a directional listen-before-talk (LBT) operation with one LBT beam that covers partial or all of a plurality of transmission beams to be transmitted by the wireless device; determining that the directional LBT operation using the one LBT beam is successful; and transmitting one transmission beam or the plurality of transmission beams in response to the determining that the directional LBT operation is successful.

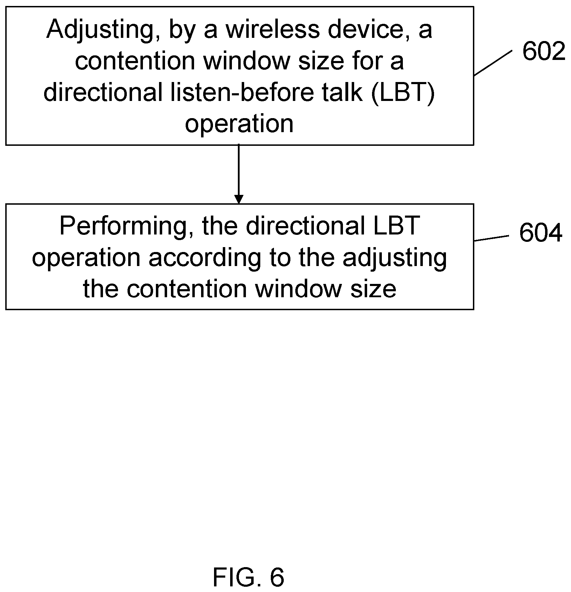

FIG. 6 shows another exemplary flowchart for channel access. Operation 602 includes adjusting, by a wireless device, a contention window size for a directional listen-before-talk (LBT) operation. Operation 604 includes performing, the directional LBT operation according to the adjusting the contention window size.

In some embodiments, the contention window size is adjusted based on a ratio or a number of received hybrid automatic repeat request acknowledgement (HARQ ACK) message or whether information received or decoded successfully for a beam level or for each beam index. In some embodiments, the reference duration used for contention window size adjustment is defined based on a beam level or based on each beam index. In some embodiments, feedback results of all beams in the reference duration is used for the adjusting the contention window size of a next transmission in response to the directional LBT operation being a wide directional LBT operation or an omni-directional LBT operation.

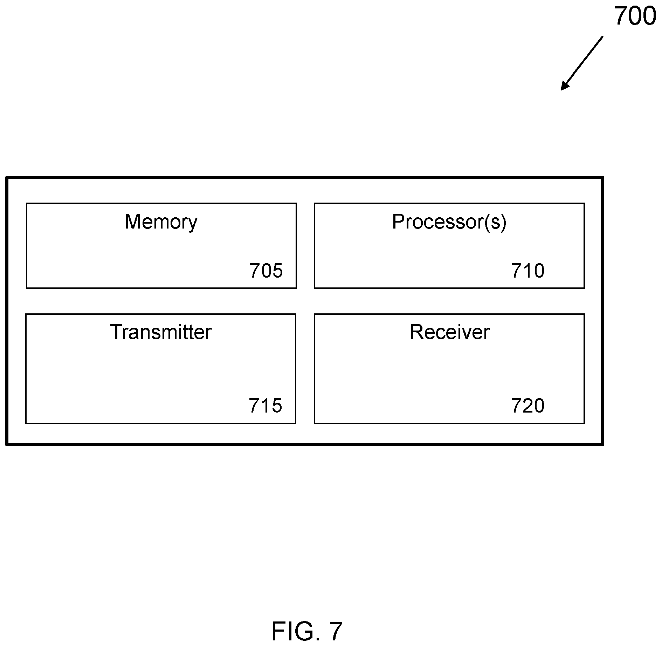

FIG. 7 shows an exemplary block diagram of a hardware platform 700 that may be a part of a network node (e.g., base station) or a user equipment. The hardware platform 700 includes at least one processor 710 and a memory 705 having instructions stored thereupon. The instructions upon execution by the processor 710 configure the hardware platform 700 to perform the operations described in FIGS. 1 to 6 and in the various embodiments described in this patent document. The transmitter 715 transmits or sends information or data to another node. For example, a network node transmitter can send a message to a user equipment. The receiver 720 receives information or data transmitted or sent by another node. For example, a user equipment can receive a message from a network node.

In this document the term "exemplary" is used to mean "an example of" and, unless otherwise stated, does not imply an ideal or a preferred embodiment.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this disclosure.

## Claims

1. A wireless communication method, comprising:
performing, by a wireless device (700), a channel access operation on each listen before talk, LBT, beam related to a transmission beam from a plurality of beams to be transmitted by the wireless device (700);
transmitting one or more of the plurality of beams in response to the channel access operation being successful; and
**characterized by** performing, in response to completing the channel access operation in advance on one or more of the LBT beams, another channel access operation in a period immediately before a start of the transmitting of one or more beams of the plurality of beams.

2. The method of claim 1, wherein the plurality of beams are transmitted at a same time.

3. The method of any one of claims 1 to 2, wherein a random back-off counter is determined independently for each beam.

4. An apparatus (700) for wireless communication comprising a processor (710), configured to implement a method recited in one or more of claims 1 to 3.

5. A non-transitory computer readable program storage medium having code stored thereon, the code, when executed by a processor (710), causing the processor (710) to implement a method recited in one or more of claims 1 to 3.

## Patentansprüche

1. Drahtloses Kommunikationsverfahren, umfassend:
Durchführen, durch eine drahtlose Vorrichtung (700), eines Kanalzugriffsvorgangs auf jedem Listen-Before-Talk-, LBT-, Strahl der sich auf einen Übertragungsstrahl aus einer Vielzahl von Strahlen bezieht, die durch die drahtlose Vorrichtung (700) übertragen werden sollen;
Übertragen eines oder mehrerer der Vielzahl von Strahlen als Reaktion darauf, dass der Kanalzugriffsvorgang erfolgreich ist; und
**gekennzeichnet durch** Durchführen, als Reaktion auf ein Abschließen des Kanalzugriffsvorgangs im Voraus auf einem oder mehreren der LBT-Strahlen, eines weiteren Kanalzugriffsvorgangs in einem Zeitraum unmittelbar vor einem Beginn des Übertragens eines oder mehrerer Strahlen der Vielzahl von Strahlen.

2. Verfahren nach Anspruch 1, wobei die Vielzahl von Strahlen gleichzeitig übertragen werden.

3. Verfahren nach einem der Ansprüche 1 bis 2, wobei ein zufälliger Back-off-Zähler für jeden Strahl unabhängig bestimmt wird.

4. Einrichtung (700) für eine drahtlose Kommunikation, umfassend einen Prozessor (710), der konfiguriert ist, um ein Verfahren, das in einem oder mehreren der Ansprüche 1 bis 3 angegeben ist, zu implementieren.

5. Nichtflüchtiges computerlesbares Programmspeichermedium, das darauf gespeicherten Code aufweist, wobei der Code, wenn er durch einen Prozessor (710) ausgeführt wird, den Prozessor (710) veranlasst, ein Verfahren, das in einem oder mehreren der Ansprüche 1 bis 3 angegeben ist, zu implementieren.

## Revendications

1. Procédé de communication sans fil, comprenant :
la réalisation, par un dispositif sans fil (700), d'une opération d'accès à un canal sur chaque faisceau d'écoute avant de parler, LBT, lié à un faisceau de transmission parmi une pluralité de faisceaux à transmettre par le dispositif sans fil (700) ;
la transmission d'un ou plusieurs parmi la pluralité de faisceaux en réponse à la réussite de l'opération d'accès au canal ; et
**caractérisé par** la réalisation, en réponse à l'achèvement préalable de l'opération d'accès au canal sur un ou plusieurs parmi les faisceaux LBT, d'une autre opération d'accès au canal dans une période précédant immédiatement un début de la transmission d'un ou plusieurs faisceaux de la pluralité de faisceaux.

2. Procédé selon la revendication 1, dans lequel la pluralité de faisceaux sont transmis en même temps.

3. Procédé selon l'une quelconque des revendications 1 à 2, dans lequel un compteur de réduction aléatoire est déterminé indépendamment pour chaque faisceau.

4. Appareil (700) pour une communication sans fil, comprenant un processeur (710), configuré pour mettre en œuvre un procédé selon une ou plusieurs des revendications 1 à 3.

5. Support de stockage non transitoire de programme lisible par ordinateur sur lequel est stocké un code qui, lorsqu'il est exécuté par un processeur (710), amène le processeur (710) à mettre en œuvre un procédé selon une ou plusieurs des revendications 1 à 3.
